# EUROPEAN PATENT APPLICATION

(11) **EP 4 557 791 A1**
(43) Date of publication of application: **21.05.2025**
(21) Application number: 23839734.3
(22) Date of filing: 07.02.2023
(51) Int. Cl.: H04W 12/041, H04W 12/043, H04W 12/06, H04W 8/02, H04W 84/04

(54) **METHOD AND DEVICE FOR TERMINAL AUTHENTICATION IN WIRELESS COMMUNICATION SYSTEM**

(30) Priority: 14.07.2022 US 202263389012 P; 02.08.2022 US 202263394307 P
(71) Applicant: LG Electronics Inc., Yeongdeungpo-gu Seoul 07336 (KR)
(72) Inventor: KIM, Anbin, Seoul 06772 (KR); YOUN, Myungjune, Seoul 06772 (KR)
(74) Representative: Maikowski & Ninnemann Patentanwälte Partnerschaft mbB
(86) International application number: PCT/KR2023/001695
(87) International publication number: WO 2024/014640

(57) **Abstract**

The present disclosure relates to a method for operation an AMF in a wireless communication system, and the method may include receiving a message based on primary authentication from a terminal, wherein the message includes any one of an SUCI or a 5G-GUTI, transmitting an authentication request message including the SUCI or an SUPI and a serving network name to an AUSF, and receiving an authentication response message from the AUSF. When the terminal is a roaming terminal and AKMA is supported, the authentication response message may include an AKMA anchor key and an A-KID indicating the AKMA anchor key, and the AMF may perform a procedure of registering the AKMA anchor key in an AAnF based on the SUPI, the AKMA anchor key and the A-KID.

## Description

### Technical Field

The present disclosure relates to a wireless communication system, and more particularly, to a method for performing authentication of a terminal. Specifically, the present disclosure relates to a method for performing, for a terminal in a roaming situation, an authentication and key management for applications (AKMA) key registration procedure for supporting an AKMA service.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide a method and apparatus for performing authentication of a terminal in a wireless communication system.

The present disclosure may provide a method and apparatus for performing an AKMA key registration procedure in a visited PLMN (VPLMN), when a terminal is in a roaming situation in a wireless communication system.

The present disclosure may provide a method and apparatus by which an authentication server function (AUSF) determines whether or not a terminal is roaming in a wireless communication system.

The present disclosure may provide a method and apparatus for registering an AKMA key in an AKMA anchor function (AAnF) of an HPLMN and an AAnF of a VPLMN after primary authentication of a terminal in a wireless communication system.

The present disclosure may provide a method and apparatus for registering an AKMA key in an AAnF of VPLMN through an access and mobility management function (AMF) of VPLMN in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method for operating an access and mobility management function (AMF) in a wireless communication may receiving a message based on primary authentication from a terminal, wherein the message includes any one of a subscription concealed identifier (SUCI) or a 5G-globally unique temporary identifier (GUTI), transmitting an authentication request message including the SUCI or a subscriber permanent identifier (SUPI) and a serving network name (SN-name) to an authentication server function (AUSF) based on the message, and receiving an authentication response message from the AUSF. In case the terminal is a roaming terminal and authentication and key management for applications (AKMA) is supported, the authentication response message may include an AKMA anchor key and an A-KID indicating the AKMA anchor key, and the AMF may perform a procedure of registering the AKMA anchor key in an AKMA anchor function (AAnF) based on the SUPI, the AKMA anchor key and the A-KID.

In addition, as an example of the present disclosure, an access and mobility management function (AMF) operating in a wireless communication may include at least one transceiver, at least one processor, and at least one memory functionally coupled with the at least one processor and storing instructions that instruct, when executed, the at least one processor to perform a specific operation. The specific operation may control the at least one transceiver to receive a message based on primary authentication from a terminal, wherein the message includes any one of a subscription concealed identifier (SUCI) or a 5G-globally unique temporary identifier (GUTI), control the at least one transceiver to transmit an authentication request message including the SUCI or a subscriber permanent identifier (SUPI) and a serving network name (SN-name) to an authentication server function (AUSF) based on the message, and control the at least one transceiver to receive an authentication response message from the AUSF. In case the terminal is a roaming terminal and authentication and key management for applications (AKMA) is supported, the authentication response message may include an AKMA anchor key and an A-KID indicating the AKMA anchor key, and the AMF may perform a procedure of registering the AKMA anchor key in an AKMA anchor function (AAnF) based on the SUPI, the AKMA anchor key and the A-KID.

In addition, as an example of the present disclosure, a method for operating a terminal in a wireless communication system may include transmitting a message based on primary authentication to an access and mobility management function (AMF), wherein the message includes any one of a subscription concealed identifier (SUCI) or a 5G-globally unique temporary identifier (GUTI), based on the terminal supporting authentication and key management for applications (AKMA), generating an AKMA anchor key and an A-KID indicating the AKMA anchor key based on a network root key, and completing authentication for a network. In case the terminal is a roaming terminal, the AMF may obtain the AKMA anchor key and the A-KID indicating the AKMA anchor key and perform a procedure of registering the AKMA anchor key in an AKMA anchor function (AAnF).

In addition, as an example of the present disclosure, a terminal operating in a wireless communication system may include at least one transceiver, at least one processor, and at least one memory functionally coupled with the at least one processor and storing instructions that instruct, when executed, the at least one processor to perform a specific operation. The specific operation may control the at least one transceiver to transmit a message based on primary authentication to an access and mobility management function (AMF), wherein the message includes any one of a subscription concealed identifier (SUCI) or a 5G-globally unique temporary identifier (GUTI), based on the terminal supporting authentication and key management for applications (AKMA), generate an AKMA anchor key and an A-KID indicating the AKMA anchor key based on a network root key, and complete authentication for a network. In case the terminal is a roaming terminal, the AMF may obtain the AKMA anchor key and the A-KID indicating the AKMA anchor key and perform a procedure of registering the AKMA anchor key in an AKMA anchor function (AAnF).

In addition, as an example of the present disclosure, a device may include at least one memory and at least one processor functionally coupled with the at least one memory. The at least one processor may control the device to receive a message based on primary authentication from a terminal, wherein the message includes any one of a subscription concealed identifier (SUCI) or a 5G-globally unique temporary identifier (GUTI), to transmit an authentication request message including the SUCI or a subscriber permanent identifier (SUPI) and a serving network name (SN-name) to an authentication server function (AUSF) based on the message, and to receive an authentication response message from the AUSF. In case the terminal is a roaming terminal and authentication and key management for applications (AKMA) is supported, the authentication response message may include an AKMA anchor key and an A-KID indicating the AKMA anchor key, and the AMF may perform a procedure of registering the AKMA anchor key in an AKMA anchor function (AAnF) based on the SUPI, the AKMA anchor key and the A-KID.

In addition, as an example of the present disclosure, a non-transitory computer-readable medium storing at least one instruction may include the at least one instruction that is executable by a processor. The at least one instruction may control a device to receive a message based on primary authentication from a terminal, wherein the message includes any one of a subscription concealed identifier (SUCI) or a 5G-globally unique temporary identifier (GUTI), to transmit an authentication request message including the SUCI or a subscriber permanent identifier (SUPI) and a serving network name (SN-name) to an authentication server function (AUSF) based on the message, and to receive an authentication response message from the AUSF. In case the terminal is a roaming terminal and authentication and key management for applications (AKMA) is supported, the authentication response message may include an AKMA anchor key and an A-KID indicating the AKMA anchor key, and the AMF may perform a procedure of registering the AKMA anchor key in an AKMA anchor function (AAnF) based on the SUPI, the AKMA anchor key and the A-KID.

In addition, the following items may be commonly applied.

As an example of the present disclosure, in case a terminal is a roaming terminal, an AMF may be an AMF for a visited public land mobile network (VPLMN), and an AAnF may be an AAnF of the VPLMN.

In addition, as an example of the present disclosure, an AUSF may be an AUSF of a home PLMN (HPLMN), and the AUSF may perform a procedure of registering an AKMA anchor key with an AAnF of the HPLMN based on an AKMA anchor key and an A-KID, irrespective of whether or not a terminal is roaming.

In addition, as an example of the present disclosure, an AUSF of an HPLMN may determine, based on a serving network name, whether or not a terminal is a roaming terminal, and in case the terminal is a roaming terminal, the AUSF of the HPLMN may transmit an authentication message including an AKMA anchor key and an A-KID indicating the AKMA anchor key to an AMF for a VPLMN, and the AMF for the VPLMN may perform a procedure of registering the AKMA anchor key with an AAnF of the VPLMN.

In addition, as an example of the present disclosure, in case a roaming terminal transmits an application session generation request to an application function (AF) of a VPLMN, an application key may be provided to a terminal based on an AAnF of the VPLMN, and in case the roaming terminal transmits an application session generation request to an AF of an HPLMN, an application key may be provided to the terminal based on an AAnF of the HPLMN.

In addition, as an example of the present disclosure, an application session request transmitted by a terminal may include an A-KID, and an AF may determine, based on the A-KID, whether or not the terminal is a roaming terminal.

In addition, as an example of the present disclosure, in case a terminal is determined to be a roaming terminal, an AF may obtain the application key derived from an AKAM anchor key, and application key expiration time information by requesting an application key to an AAnF of a VPLMN and perform application session establishment with the terminal.

In addition, as an example of the present disclosure, in case a terminal is determined to be a non-roaming terminal, an AF may obtain the application key derived from an AKAM anchor key and application key expiration time information by requesting an application key to an AAnF of an HPLMN and perform application session establishment with the terminal.

In addition, as an example of the present disclosure, an AMF for a VPLMN may select an AAnF of the VPLMN based on a routing indicator (RID) and a home network identifier in an A-KID according to a network repository function (NRF) discovery and selection procedure or a local configuration.

In addition, as an example of the present disclosure, an AMF for a VPLMN may select an AAnF of the VPLMN by further utilizing a serving PLMN ID.

In addition, as an example of the present disclosure, an A-KID may further include a serving PLMN ID, and in case a terminal is a roaming terminal, the serving PLMN ID in the A-KID may indicate a VPLMN ID, and in case the terminal is a non-roaming terminal, the serving PLMN ID in the A-KID may be set to a preset value.

In addition, as an example of the present disclosure, in case a terminal and an AUSF perform primary authentication, the AUSF may receive, from unified data management (UDM), an indication regarding whether or not AKMA is supported, and in case AKMA is supported, an AKMA anchor key and an A-KID may be generated based on a network root key in each of the terminal and the AUSF.

In addition, as an example of the present disclosure, a message based on primary authentication received from a terminal may be an N1 message.

### Advantageous Effects

The present disclosure may provide a method for performing authentication of a terminal in a wireless communication system.

The present disclosure may provide a method for performing an AKMA key registration procedure in a VPLMN when a terminal is in a roaming situation.

The present disclosure may provide a method for an AUSF to determine whether or not a terminal is roaming in a wireless communication system.

The present disclosure may provide a method for registering an AKMA key in an AAnF of an HPLMN and an AAnF of a VPLMN after primary authentication of a terminal in a wireless communication system.

The present disclosure may provide a method for registering an AKMA key in an AAnF of a VPLMN through an AMF of the VPLMN in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a view showing a method for initiating an authentication procedure that is applicable to the present disclosure.
FIG. 6 is a view showing a method for performing authentication based on an EAP AKA' method that is applicable to the present disclosure.
FIG. 7 is a view showing a method for performing authentication based on a 5G AKA' method that is applicable to the present disclosure.
FIG. 8 is a view showing a hierarchical structure of keys applicable to the present disclosure.
FIG. 9 is a view showing an AKMA key hierarchical structure applicable to the present disclosure.
FIG. 10 is a view showing a method for establishing an application session according to an embodiment of the present disclosure.
FIG. 11 is a view showing an AAnF selection and search procedure applicable to the present disclosure.
FIG. 12 is a view showing a method for initiating AKMA applicable to the present disclosure.
FIG. 13 is a view showing a method for deleting an AKMA context applicable to the present disclosure.
FIG. 14 is a view showing a method for registering an AKMA key in an AAnF of a VPLMN that is applicable to the present disclosure.
FIG. 15 is a view showing a method for registering an AKMA key in an AAnF of an HPLMN that is applicable to the present disclosure.
FIG. 16 is a view showing an A-KID applicable to the present disclosure.
FIG. 17 is a view showing an AKMA key registration method that is applicable to the present disclosure.
FIG. 18 is a flowchart of a method for operating an AMF that is applicable to the present disclosure.
FIG. 19 is a view showing a method for operating a terminal that is applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (1) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

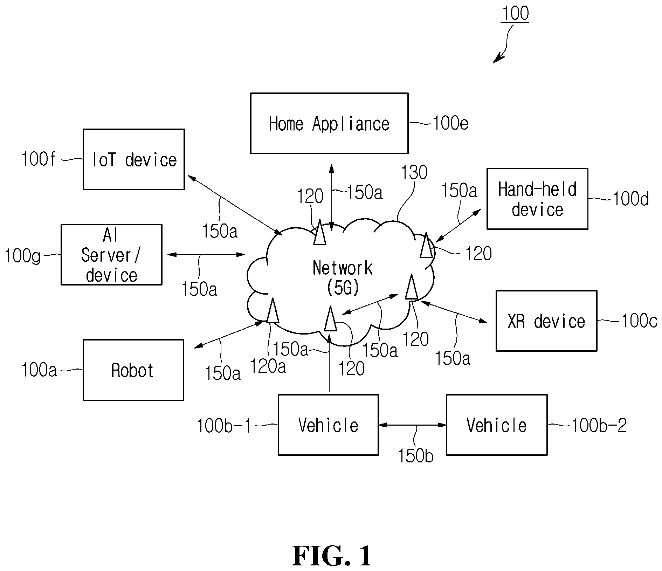

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

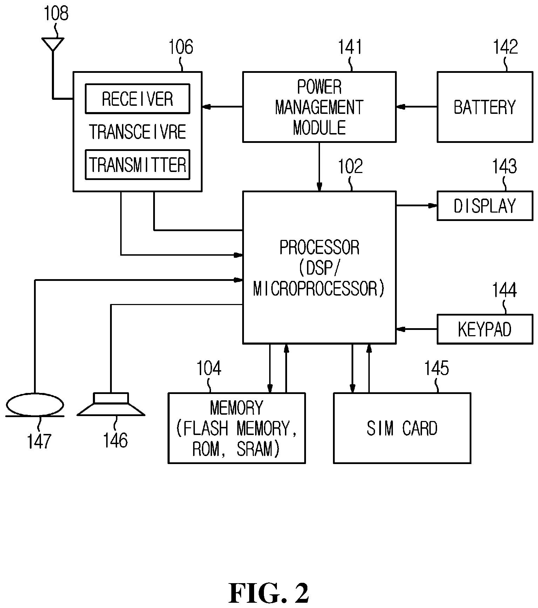

FIG. 2 is a view showing an example of a UE to which the implementation of the present disclosure is applied.

Referring to FIG. 2, a UE 100 may include a processor 102, a memory 104, a transceiver 106, one or more antennas 108, a power management module 141, a battery 142, a display 143, a keypad 144, a subscriber identification module (SIM) card 145, a speaker 146, and a microphone 147.

The processor 102 may be configured to implement a description, a function, a procedure, a proposal, a method and/or an operating flowchart disclosed in the present specification. The processor 102 may be configured to control one or more different components of the UE 100 to implement a description, a function, a procedure, a proposal, a method and/or an operating flowchart disclosed in the present specification. A layer of a wireless interface protocol may be embodied in the processor 102. The processor 102 may include an ASIC, other chipsets, a logic circuit and/or a data processing device. The processor 102 may be an application processor. The processor 102 may include at least one of a DSP, a central processing unit (CPU), a graphics processing unit (GPU), and a modem (modulator and demodulator).

The memory 104 may be coupled operably with the processor 102 and store various information for operating the processor 102. The memory 104 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 104 and be executed by the processor 102. The memory 104 may be embodied in the processor 102 or outside the processor 102 in which case the memory 104 may be communicatively coupled with the processor 102 through various methods known in technology.

The transceiver 106 may be operably coupled with the processor 102 and transmit and/or receive a radio signal. The transceiver 106 may include a transmitter and a receiver. The transceiver 106 may include a baseband circuit for processing a radio frequency signal. The transceiver 106 may transmit and/or receive a radio signal by controlling the one or more antennas 108.

The power management module 141 may manage the power of the processor 102 and/or the transceiver 106. The battery 142 may supply power to the power management module 141.

The display 143 may output a result processed by the processor 102. The keypad 144 may receive an input to be used in the processor 102. The keypad 144 may be displayed on the display 143.

The SIM card 145 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 146 may output a sounded-related result processed in the processor 102. The microphone 147 may receive a sounded-related input to be used in the processor 102.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 400of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

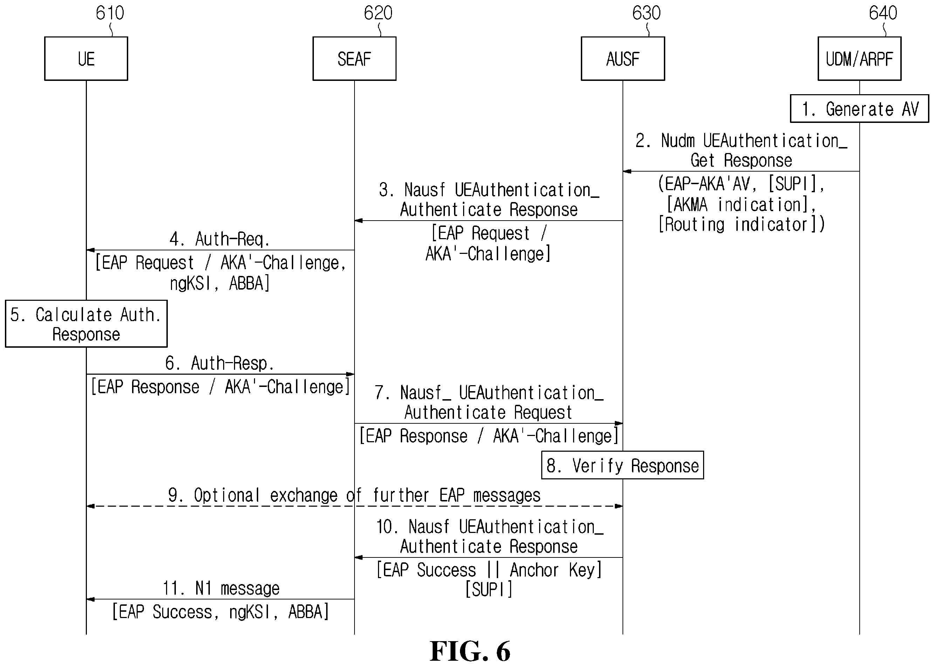

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

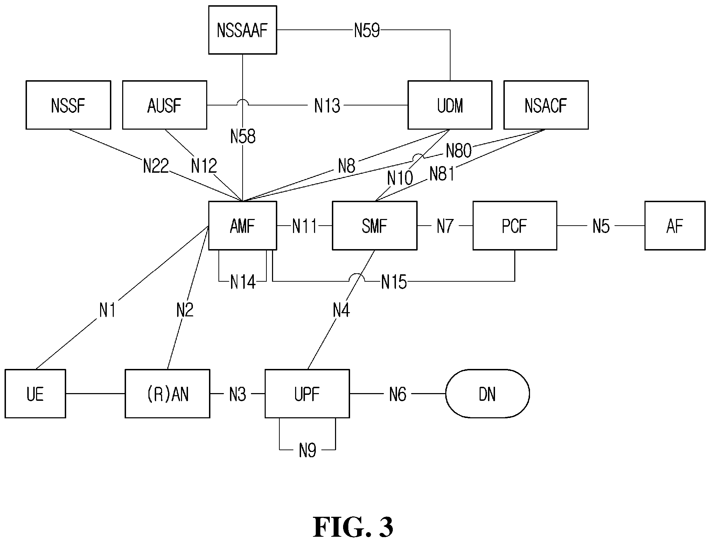

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

Hereinafter, the present disclosure describes each layer of a wireless protocol.

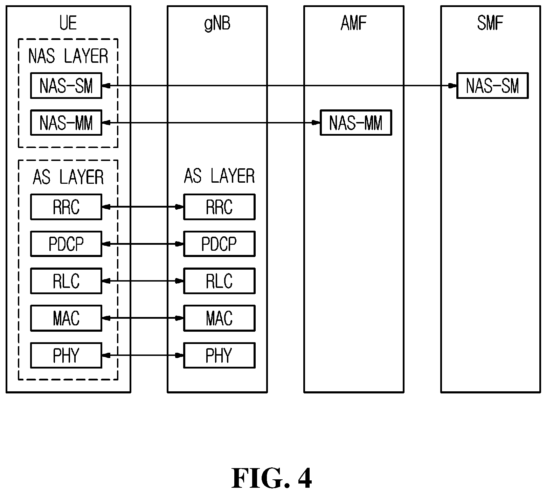

FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

In case a terminal is connected to a core network, the terminal may perform a security procedure. As an example, the terminal may select a core network (e.g., 5GC, EPC) and be connected to the core network, and a different security procedure may be performed based on a selected core network. In a security procedure, the terminal and the network may perform primary authentication and a key agreement procedure for mutual authentication. When the terminal and the network complete the primary authentication, K_{AUSF} may be generated and stored in an authentication server function (AUSF). Herein, K_{SEAF} for a serving network may be derived by K_{AUSF}, and one or more security context keys may be derived from K_{SEAF} in the serving network without a new authentication procedure.

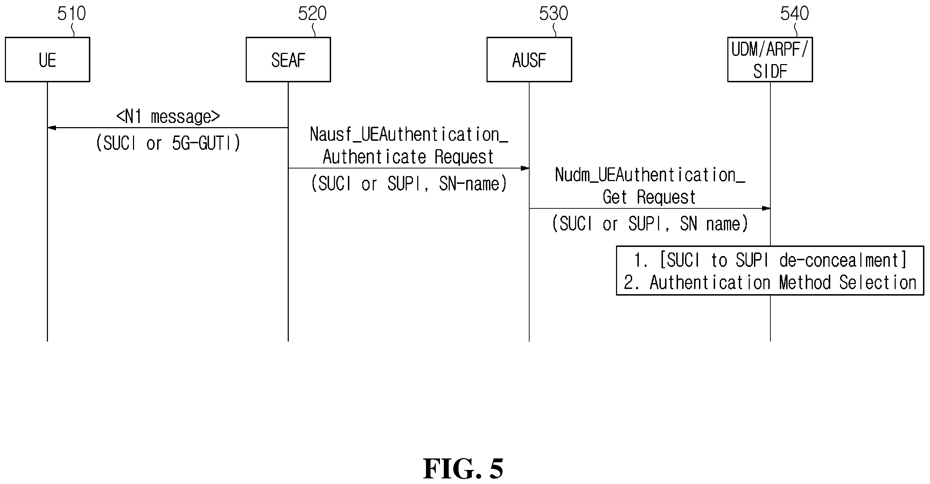

FIG. 5 is a view showing a method for starting an authentication procedure that is applicable to the present disclosure. Referring to FIG. 5, a security anchor function (SEAF) 1020 may perform an authentication procedure with a terminal 510. As an example, the SEAF may be a partial function of an AMF but is not limited to a specific embodiment.

The terminal 510 and the SEAF 520 may perform an authentication procedure in a procedure of establishing a signaling connection based on an SEAF policy. Herein, the terminal 510 may forward an N1 message including a subscription concealed identifier (SUCI) or 5G-globally unique temporary identifier (GUTI) to the SEAF 520. The SEAF 520 may forward an authentication request message (e.g., Nausf_UEAuthentication_Authenticate Request) including the SUCI or a subscriber permanent identifier (SUPI) and a serving network name (SN-name) to an AUSF 530. Thus, the AUSF 530 may determine whether the terminal is a roaming terminal, which will be described below.

As an example, in case there is a valid 5G-GUTI and a terminal is reauthenticated, the SEAF 520 may transmit an authentication request message including a SUPI. After receiving the authentication request message, the AUSF 530 may check whether the SEAF 520 in a serving network is qualified to use a serving network name. Herein, if the SEAF 520 is not qualified, the AUSF 530 may forward a response for indicating no qualification to the SEAF 520. On the other hand, if the SEAF 520 is qualified, the AUSF 530 may transmit a request message (e.g., Nudm_UEAuthentication_Get Request) to a user data management (UDM)/ authentication credential repository and processing function (ARPF) 540. Herein, the request message may include an SUCI or an SUPI together with information on the serving network name. As an example, if the UDM/ARPF 540 receives the SUCI, the UDM/ARPF 540 may obtain the SUPI from the SUCI. Then, the UDM/ARPF 540 may select an authentication method.

In case a terminal performs a mutual authentication procedure to access a network, in a new communication system (e.g., 5G system), mutual authentication between the terminal and the network may be performed using a 5G authentication key agreement (AKA) method or an EAP AKA' method.

As an example, FIG. 6 is a view showing a method for performing authentication based on an EAP AKA' method that is applicable to the present disclosure. Referring to FIG. 6, user data management (UDM)/ authentication credential repository and processing function (ARPF) 640 may generate an authentication vector (AV). Next, the UDM/ARPF 640 may calculate a CK' and an IK' based on a cipher key (CK) and an integrity key (IK) and forward an AV' including a RAND, an AUTN, an XRES, the CK' and the IK' to an authentication server function (AUSF) 630. As an example, as a response to an authentication request of an AUSF 630, the UDM/ARPF 640 may forward the AV' to the AUSF 630. In addition, based on an authentication request of a terminal, the AUSF 630 may perform an authentication request to the UDM/ARPF 640 but is not limited to the above-described embodiment. In addition, as an example, the above-described authentication response may further include at least one or more of an SUPI, an AKMA indicator, and a routing indicator based on the authentication request of the AUSF 630 but is not limited to the above-described embodiment.

Next, based on the AV', the AUSF 630 may transmit an EAP request and an AKA'-Challenge to a security anchor function (SEAF) 620. As an example, the AKA'-Challenge may be a value that is generated based on a root key of a user ID. Herein, the AUTN may be generated and verifies based on the AKA'-Challenge. Next, the SEAF 620 may transmit an authentication request message including the EAP request and the AKA'-Challenge to a terminal 610 using an NAS message. As an example, the authentication request message may further include an ngKSI and an ABBA parameter. Herein, the ngKSI may be a value for identifying a security context that is generated when an AMF succeeds in authentication. When the terminal 610 receives the authentication request message, the terminal 610 may generate an AUTN by using a same algorithm as a network based on a key held by the terminal 610 and perform authentication based on whether the generated AUTN is identical to a received AUTN. Next, based on a value generated based on the key held in it, the terminal 610 may transmit an authentication response including an EAP response and the AKA'-Challenge to the SEAF 620. The SEAF 620 may also transmit the authentication response including the EAP response and the AKA'-Challenge to the AUSF 630, and the AUSF 630 may perform authentication through verification of the value generated by the terminal. Thus, mutual authentication may be performed. Next, further authentication between the AUSF 630 and the terminal 610 may be performed, but the present disclosure may not be limited thereto.

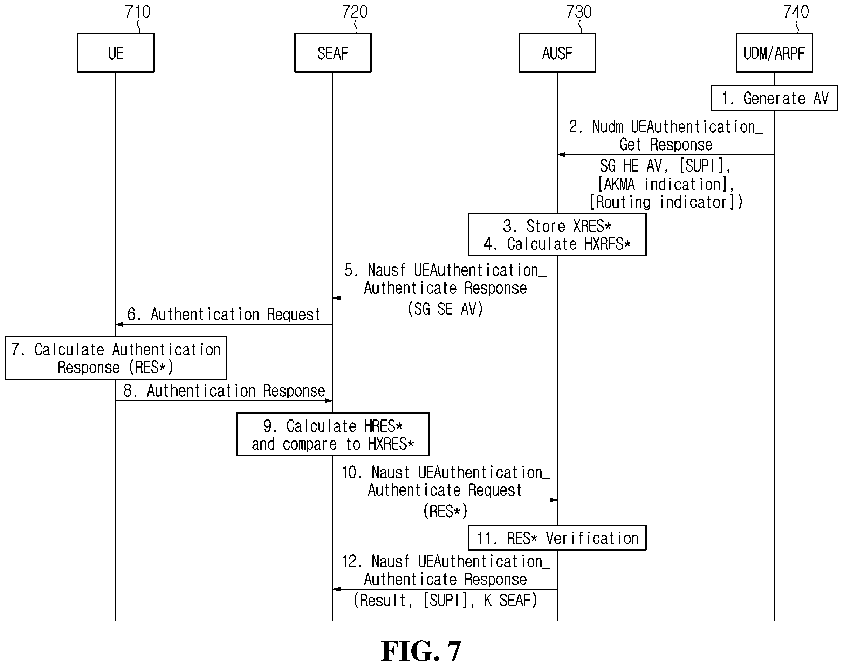

In addition, as an example, FIG. 7 is a view showing a method for performing authentication based on a 5G AKA' method that is applicable to the present disclosure.

Referring to FIG. 7, a UDM/ARPF 740 may generate an authentication vector (AV). As an example, the AV may be a 5G HE AV, and the 5G HE AV may be generated based on a RAND, an AUTN, an XRES* and a K_AUSF. Next, the UDM/ARPF 740 may forward the 5G HE AV to an AUSF 730. As an example, as an authentication response to an authentication request of the AUSF 730, the UDM/ARPF 740 may forward the 5G HE AV to the AUSF 730. The AUSF 730 may perform an authentication request to the UDM/ARPF 740 based on an authentication request of a terminal but is not limited to the above-described embodiment. In addition, the above-described authentication response may further include at least one or more of an SUPI, an AKMA indicator, and a routing indicator, based on the authentication request of the AUSF 730, but is not limited to the above-described embodiment.

Next, the AUSF 730 may generate a 5G AV based on the 5G HE AV. Herein, the AUSF 730 may calculate an HXRES* based on the XRES* and a K_SEAF based on the K_AUSF. The AUSF 730 may generate a 5G AV by replacing the XRES* by the HXRES* and replacing the K_AUSF by the K_SEAF in the 5G HE AV. Next, the AUSF 730 may generate and forward a 5G SE AV including a RAND, an AUTH and the HXRES* to the SEAF 720, and the SEAF 720 may transmit an authentication request message including a RAND and an AUTH to a terminal 710 using an NAS message. As an example, the authentication request message may further include an ngKSI and an ABBA parameter. Herein, the ngKSI may be a value for identifying a security context that is generated when the terminal 710 and an AMF succeed in authentication. When the terminal 710 receives the authentication request message, the terminal 710 may generate an AUTN by using a same algorithm as a network based on a key held by the terminal 610 and perform authentication based on whether the generated AUTN is identical to the received AUTN.

Next, the terminal 710 may generate a RES* value based on a key held by it and transmit an authentication response including RES* to the SEAF 720. The SEAF 720 may calculate HRES* based on RES* and compare HRES* with the above-described HXRES*. If the two values are identical, the SEAF 720 may determine success of authentication and transmit an authentication response including RES* to the AUSF 730. When receiving the authentication response including RES*, the AUSF 730 may perceive that mutual authentication is performed.

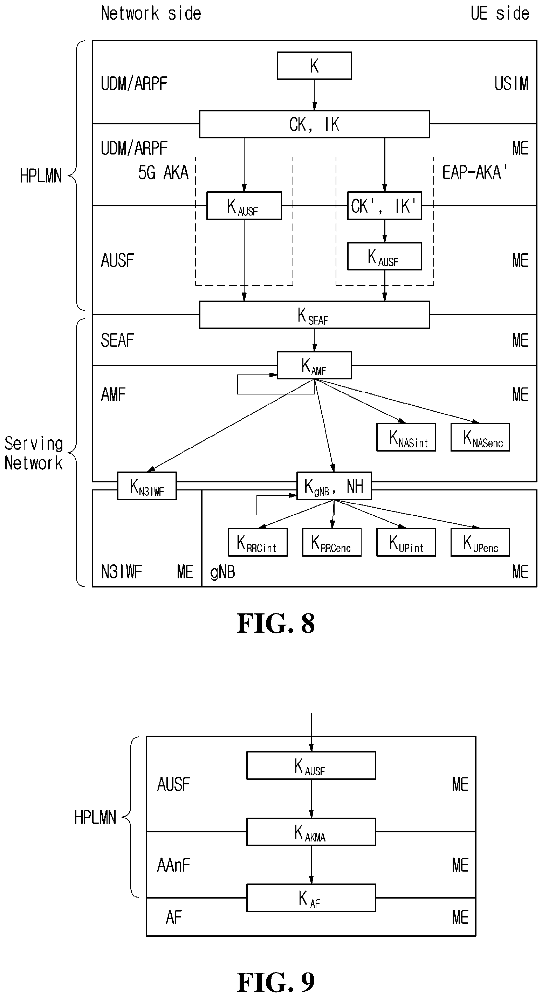

FIG. 8 is a view showing a hierarchical structure of keys applicable to the present disclosure. Referring to FIG. 8, in a UDM/ARPF, a cipher key (CK) and an integrity key (IK) may be generated based on a key (K). Herein, if authentication is performed based on the EAP AKA' method of FIG. 6, a CK' and an IK' may be calculated from the CK and the IK, and an AV' including a RAND, an AUTN, an XRES, the CK' and the IK' may be forwarded to an AUSF to generate K_{AUSF}. On the other hand, if authentication is performed based on the 5G AKA method of FIG. 7, K_{AUSF} may be generated from a CK and an IK. Herein, an SEAF may generate K_{SEAF} based on K_{AUSF}, and K_{AMF} may be generated by K_{SEAF}. In addition, at least any of the various keys of FIG. 8 may be generated based on K_{AMF}, and this may be as described in FIG. 8.

FIG. 9 is a view showing an AKMA key hierarchical structure applicable to the present disclosure. As an example, an authentication and key management for applications (AKMA) may be a system capable of generating an application key that is necessary when an application and a terminal perform encrypted communication. Herein, the application key may be generated based on mutual authentication between the terminal and a mobile communication network and a network root key K_{AUSF} generated after the authentication. As a specific example, after primary authentication of the terminal is successful based on an AKMA system, K_{AUSF} may be generated. Referring to FIG. 9, in each of a network (AUSF) and a terminal, K_{AKMA} may be generated as a root key that may be used to generate an application key later, and an A-KID capable of indicating K_{AKMA} may also be generated together.

Next, K_{AKMA} generated in the AUSF may be forwarded to an AKMA anchor function (AAnF). As an example, the AUSF may include an SUPI, the A-KID and K_{AKMA} in an AKMA anchor key registration request, forward the AKMA anchor key registration request to the AAnF, and receive an AKMA anchor key registration response from the AAnF.

In addition, the terminal may generate K_{AF} from K_{AKMA} in advance. The terminal may include the A-KID in an application function (AF) and request generation of an application session. As an example, the terminal and the AF may be connected based on a Ua interface. The AF may verify the A-KID include a request for generation of the application session and identify a corresponding security context. As an example, if there is no corresponding security context, the AF may request the AAnF to generate a new K_{AF}. Next, the AAnF may generate K_{AKMA} based on the new K_{AF} and set and send an expiration time of the K_{AF} in a response to the AF.

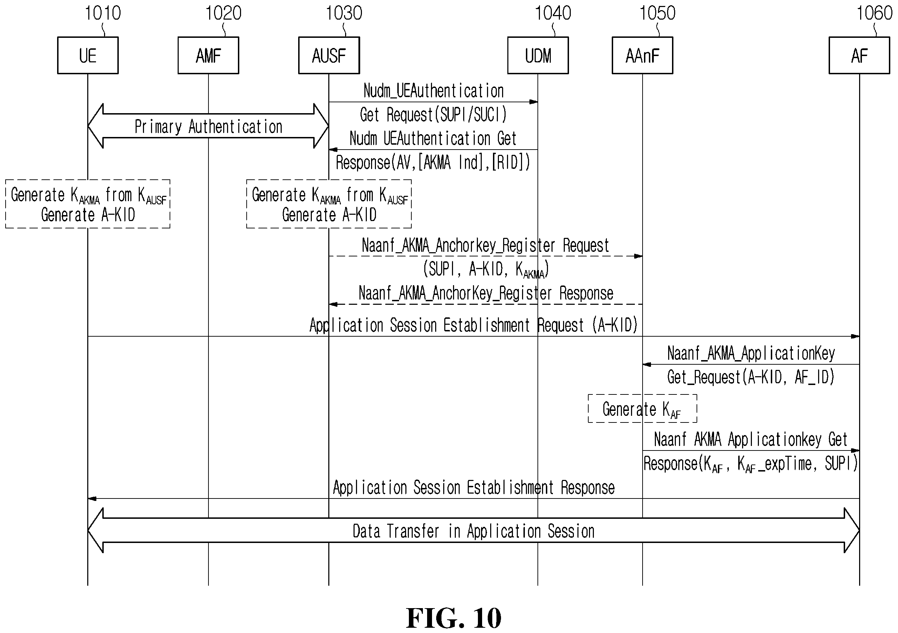

FIG. 10 is a view showing a method for establishing an application session according to an embodiment of the present disclosure. Referring to FIG. 10, when primary authentication for a terminal 1010 is performed, an AUSF 1030 may request information and a method necessary for the authentication to a unified data management (UDM) 1040. Herein, based on a response received from the UDM 1040, the AUSF 1030 may check whether an AKMA anchor key is to be generated. That is, the UDM 1040 may provide information regarding whether the AKMA anchor key is to be generated, when responding to the AUSF 1030. As an example, the information regarding whether the AKMA anchor key is to be generated may be indicated based on an "AKMA Ind" value. That is, if the "AKMA Ind" value is included in a response of the UDM 1040, the AUSF 1030 may generate the AKMA anchor key. When the "AKMA Ind" value is included in the response of the UDM 1040, a RID for the terminal may also be included in the response and be forwarded to the AUSF 1030 together with the "AKMA Ind" value.

Next, in case the primary authentication is successfully completed and the AUSF 1030 receives the "AKMA Ind" value from the UDM 1040, the AUSF 1030 may store K_{AUSF} and generate an AKMA anchor key (K_{AKMA}) and an A-KID from the K_{AUSF}. After the AKMA anchor key is generated, the AUSF 1030 may select an AAnF 1050 through a function of "AAnF search and selection". In addition, the AUSF 1030 may forward the generated A-KID and K_{AKMA} to the AAnF 1050 together with an SUPI of the terminal. Next, the AAnF 1050 may transmit a response to the AUSF 1030 to indicate completion of the procedure. The terminal 1010 may generate K_{AKMA} and an A-KID before initiating an AKMA application and forward the generated A-KID when requesting an application service to an AF 1060. Herein, as an example, the terminal 1010 may generate K_{AF} before or after transmitting a request message. In case the AF 1060 does not have a context related to the received A-KID, the AF 1060 may transmit the A-KID to the AAnF 1050 to request K_{AF}. Herein, the AF 1060 may transmit a request including an AF_ID. Next, the AAnF 1050 may perform a procedure for providing a service to the AF. In addition, as an example, the AAnF 1050 may stop the procedure and is not limited to a specific embodiment.

As an example, based on the presence of K_{AKMA} related to the A-KID, the AAnF 1050 may verify whether AKMA is available. In case the AAnF 1050 has a corresponding K_{AKMA}, the AAnF 1050 may perform a procedure for providing a service to the AF 1060. Herein, in case the AAnF 1050 does not have K_{AF}, the AAnF 1050 may generate K_{AF}. Next, the AAnF 1050 may forward the SUPI, the generated K_{AF} and a K_{AF} expiration time to the AF 1060. Herein, the AF 1060 may notify completion of generation of an application session, and data transmission may be performed based on the application session.

On the other hand, in case the AAnF 1050 has no corresponding K_{AKMA}, the AAnF 1050 may transmit an error response to the AF 1060. Herein, the AF 1060 may also notify a cause of failure to the terminal, and the terminal may request a new application session to the AF 1060 with a latest A-KID for an AKMA.

After the AF 1060 forwards a response about completion of generation of an application session to the terminal 1010, the expiration time of K_{AF} may arrive. Herein, when K_{AF} expires, whether data received from the terminal 1010 is received through the application session, a different operation may be performed.

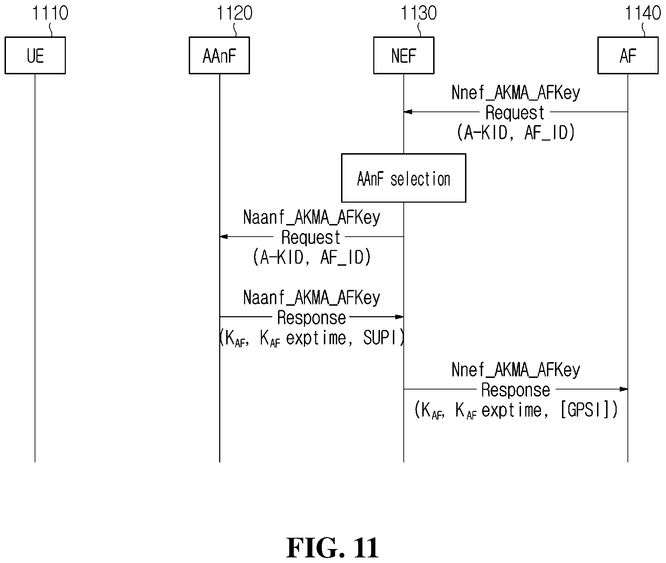

FIG. 11 is a view showing an AAnF selection and search procedure applicable to the present disclosure.

Referring to FIG. 11, in case an AF 1140 receives an AKMA key request for a terminal 1110 from an AAnF 1120, the above-described AAnF selection and search procedure may be performed. Herein, the AF 1140 may transmit a request to the AAnF 1120 through a network exposure function (NEF) 1130, and a request message may include an A-KID and an AF_ID. The NEF 1130 may perform a procedure of selecting the AAnF 1120 based on the request message and transmit a request message including the A-KID and the AF_ID to the selected AAnF 1120. Next, the NEF 1130 may receive a response message including an SUPI, a generated K_{AF}, and a K_{AF} expiration time and forward the response message to the AF 1130, and a subsequent operation may be as described above.

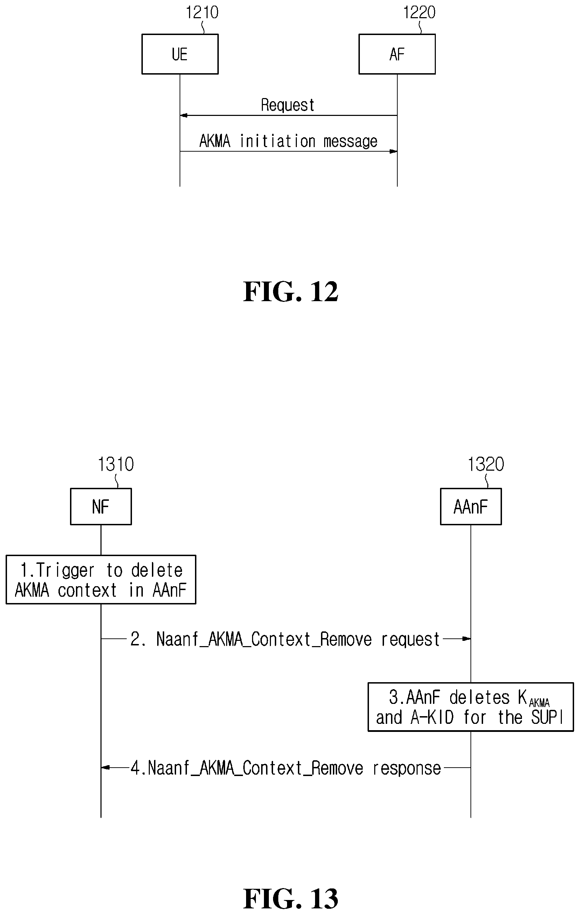

FIG. 12 is a view showing a method for initiating AKMA applicable to the present disclosure. Referring to FIG. 12, in case a terminal 1210 fails to perceive an AKMA service, the terminal 1210 may forward an AKMA-related request to an AF 1220. Herein, the AKMA-related request may include or not include AKMA-related parameters. Herein, in case the AF 1220 uses shared keys for AKMA but the request does not include AKMA-related parameters, the AF 1220 may forward an AKMA initial message to the terminal 1210, and thus the terminal 1210 may perceive the AKMA service and operate as described above.

FIG. 13 is a view showing a method for deleting an AKMA context applicable to the present disclosure. Referring to FIG. 13, an NF 1310 may trigger removal of an AKMA context in an AANF 1320 based on a local policy. Herein, the NF 1310 may discover the AANF 1320 of a terminal and forward a removal request message (e.g., Naanf_AKMA_Context_Remove request) to the AANF 1320. The AANF 1320 may receive the removal request message form the NF 1310 and remove a KAKMA and an A-KID based on an SUPI. Next, the AANF 1320 may forward a removal response message (e.g., Naanf_AKMA_Context_Remove response) to the NF 1310.

As described above, an AKMA may be a system that enables an application key to be generated as it is necessary when an application and a terminal perform encrypted communication. Specifically, it may be a system that enables an application key to be generated based on mutual authentication between a terminal and a mobile communication network and a network root key K_{AUSF} generated after the authentication is performed. Herein, as an example, the AKMA may provide in a home public land mobile network (HPLMN) as a home network, but in case a terminal accesses a visited PLMN (VPLMN) as a visited network, the AKMA may not be supported. However, if a terminal accesses a VPLMN and then uses an application server of an HPLMN, an AKMA service may be needed, which will be described below. Background technology, terms and abbreviations used in this specification may refer to what is described in standard documents published prior to this specification. For example, the following documents and abbreviations may be referenced.

Based on a network root key K_{AUSF} generated after a terminal succeeds in primary authentication based on an AKMA system, a network and the terminal may generate K_{AKMA} as a root key that may be used to generate an application key later. Herein, an A-KID capable of indicating K_{AKMA} may also be generated, which is the same as described above.

K_{AKMA} generated in an AUSF may be forwarded to an AAnF. In addition, a terminal may generate K_{AF} from K_{AKMA} in advance. Next, the terminal may send an application session generation request including an A-KID to an AF. The AF may verify the A-KID included in the application session generation request and check presence of a corresponding security context. As an example, in case there is no security context, the AF may request an AAnF to generate a new K_{AF}. The AAnF may generate the new K_{AF} based on K_{AKMA}, set an expiration time of the K_{AF} and then forward information on the K_{AF} and the expiration time of the K_{AF} to the AF.

However, the above-described operation may be applicated to a case in which both the terminal and the AF are present in a home network (HPLMN). In case a terminal accesses a visited network (VPLMN) and requires a roaming service, a method for providing the service based on an AKMA system may be needed. Specifically, in case a terminal accesses a VPLMN and requires a roaming service, an operation for an AKMA service may be needed.

As an example, when a terminal accesses a VPLMN and requires a roaming service, the terminal may register an AKMA key not only in an AAnF of an HPLMN but also in an AAnF of the VPLMN and thus utilize an AKMA service both in the HPLMN and the VPLMN, and a detailed method for this will be described below.

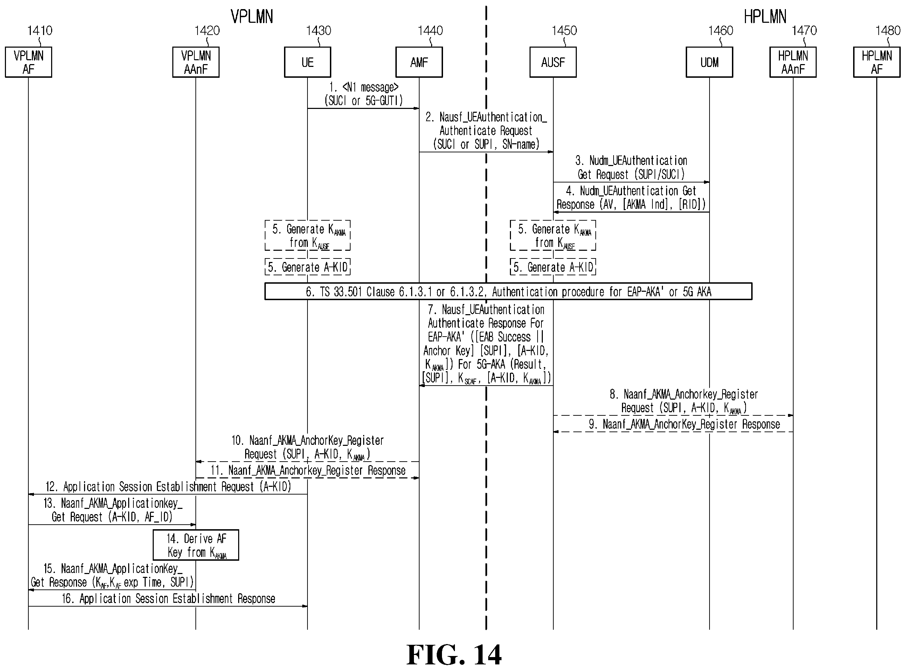

FIG. 14 is a view showing a method for registering an AKMA key in an AAnF of a VPLMN that is applicable to the present disclosure.

Referring to FIG. 14, in case a terminal 1430 performs a primary authentication procedure, the terminal 1430 may forward a message including an SUCI or a 5G-GUTI to an AMF 1440. Herein, the message forwarded to the AMF 1440 may be an N1 message. For the authentication procedure, an SEAF may transmit an authentication request message (e.g., Nausf_UEAuthentication_Authenticate Request) to an AUSF 1450. As an example, the SEAF may be a partial function of the AMF but is not limited thereto. Through what is described above, a terminal authentication service may be performed. Herein, the authentication request message (e.g., Nausf_UEAuthentication_Authenticate Request), which the SEAF transmits to the AUSF 1450, may include an SUCI or SUPI and a serving network name. Based on the serving network name in the authentication request message (e.g., Nausf_UEAuthentication_Authenticate Request), the AUSF 1450 may determine whether or not the terminal is a roaming terminal, which will be described below. Next, the AUSF 1450 may forward a message for requesting information and a method necessary for authentication (e.g., Nudm_UEAuthentication_Get Request service operation) to UDM 1460. Herein, the above-described message may include the SUCI or SUPI. Next, in case the UDM 1460 responds to the AUSF 1450, if an AKMA service is needed, the terminal 1430 may include AKMAInd in a response message to indicate whether or not an AKMA anchor key is generated. As an example, in case the response message includes AKMA Ind, the UDM 1460 may include a routing indicator (RID) for the terminal 1430 in the response message and thus forward the RID to the AUSF 1450. When the AUSF 1450 receives AKMA Ind from the UDM 1460, the AUSF 1450 may store K_{AUSF} and generate the AKMA anchor key K_{AKMA} and an A-KID based on K_{AUSF}. In addition, the terminal 1430 may also generate the AKMA anchor key K_{AKMA} and the A-KID. Next, the authentication procedure may be performed based on an authentication method, and the authentication method may be the same as described in FIG. 6 or FIG. 7 but is not limited to a specific embodiment. Next, the AUSF 1450 may indicate whether or not the authentication procedure is successful to the AMF (or SEAF 1440) through a response (e.g., Nausf_UEAuthentication_Authenticate Response). As a concrete example, as shown in FIG. 6, in EAP AKA', a response including EAP success, an anchor key and an SUPI may be forwarded to an SEAF. In addition, as shown in FIG. 7, in 5G AKA, a response including a result, an SUPI and K_{SEAF} may be forwarded to an SEAF.

Herein, as an example, the AUSF 1450 may select an AAnF 1470 of an HPLMN through an AAnF discovery and selection procedure after generating the AKMA anchor key. Next, the AUSF 1450 may send the generated A-KID and AKMA anchor key K_{AKMA} to the AAnF 1470 of the HPLMN together with the SUPI of the terminal. That is, the AUSF 1450 may transmit an AKMA anchor key registration request message (e.g., Naanf_AKMA_anchorkey_Register Request) to the AAnF 1470. Herein, the AKMA anchor key registration request message (e.g., Naanf_AKMA_anchorkey_Register Request) may include the generated A-KID, AKMA anchor key K_{AKMA} and the SUPI of the terminal. Next, the AAnF 1470 of the HPLMN may respond to the AUSF 1450 to notify the completion of registration. That is, the AAnF 1470 of the HPLMN may transmit an AKMA anchor key registration response message (e.g., Naanf_AKMA_anchorkey_Register Response) to the AUSF 1450.

Herein, as an example, in case the terminal 1430 is a roaming terminal and supports AKMA, the terminal 1430 may find an AAnF 1420 of a VPLMN based on a network repository function (NRF) discovery and selection procedure or a local configuration. NRF may perform a function of indicating which network function is located where and thus retrieve the AAnF 1420 of the VPLMN. As an example, the above-described response (e.g., Nausf_UEAuthentication_Authenticate Response) of the AUSF 1450 regarding whether or not an authentication procedure for AKMA key registration is successful may further the AKMA anchor key K_{AKMA} and the A-KID. That is, the AUSF 1450 may forward the AKMA anchor key K_{AKMA} and the A-KID to an SEAF of the VPLMN. As described above, the AUSF 1450 may determine whether or not a terminal is a roaming terminal, based on a serving network name of an authentication request message (e.g., Nausf_UEAuthentication_Authenticate Request).

Next, the AMF 1440 of the VPLMN may select an AAnF instance based on the NRF discovery and selection procedure or the local configuration. Next, the AMF 1440 of the VPLMN may forward the forwarded A-KID and AKMA anchor key K_{AKMA} to the AAnF 1420 of the VPLMAN together with the SUPI of the terminal. That is, the AMF 1440 of the VPLMN may transmit the AKMA anchor key registration request message (e.g., Naanf_AKMA_anchorkey_Register Request) to the AAnF 1420 of the VPLMN. Herein, the AKMA anchor key registration request message (e.g., Naanf_AKMA _anchorkey_Register Request) may include the generated A-KID and AKMA anchor key K_{AKMA} and the SUPI of the terminal. Next, the AAnF 1420 of the VPLMN may response to the AMF 1440 of the VPLMN to notify completion of registration. That is, the AAnF 1420 of the VPLMN may transmit an AKMA anchor key registration response message (e.g., Naanf_AKMA_anchorkey_Register Response) to the AMF 1440 of the VPLMN. That is, the AMF 1440 of the VPLMN may obtain the A-KID and the AKMA anchor key K_{AKMA} for supporting the AKMA service and thus perform a key registration procedure in the AAnF 1420 of the VPLMN.

Next, in case the terminal requires an application service, the terminal may request application session establishment by forwarding an A-KID generated in a primary authentication procedure to an AF located in a VPLMN or HPLMN in which the service is needed. Based on the received A-KID, the AF may determine whether the request is for a service for a roaming terminal, which will be described below.

As an example, in case the terminal is a roaming terminal, an application key may requested to the AAnF 1420 of the VPLMN that is retrieved through the NRF discovery and selection procedure or a local configuration, and this may be the same as illustrated in FIG. 14. More specifically, the terminal 1430 may transmit an application session establishment request to an AF 1410 of the VPLMN based on a Ua interface. Herein, the application session establishment request may include an A-KID. In case the AF 1410 of the VPLMN does not have a security context related to the received A-KID, the AF 1410 of the VPLMN may send the A-KID to the AAnF 1420 of the VPLMN to request K_{AF}. As an example, the AF 1410 of the VPLMN may perform a request including an AF_ID of the terminal to the AAnF 1420 of the VPLMN. Next, the AAnF 1420 of the VPLMN may generate and forward K_{AF} to the AF 1410 of the VPLMN, when the AAnF 1420 of the VPLMN is capable of providing a service to the AF 1410 of the VPLMN. On the other hand, if the AAnF 1420 of the VPLMN is incapable of providing a service to the AF 1410 of the VPLMN, the AAnF 1420 of the VPLMN may suspend the corresponding procedure. Specifically, the AAnF 1420 of the VPLMN may verify whether or not AKMA is available based on the presence of K_{AKMA} related to A-KID. Herein, in case there is KAKMA corresponding to the AAnF 1420 of the VPLMN, if there is no K_{AF} that is made before, the AAnF 1420 of the VPLMN may generate K_{AF}. Next, the AAnF 1420 of the VPLMN may forward an SUPI, the generated K_{AF} and an K_{AF} expiration time to the AF 1410 of the VPLMN. Next, the AF 1410 of the VPLMN may inform the terminal 1430 of the completion of an application session. When the application session is generated, the terminal and the application may perform communication through the session.

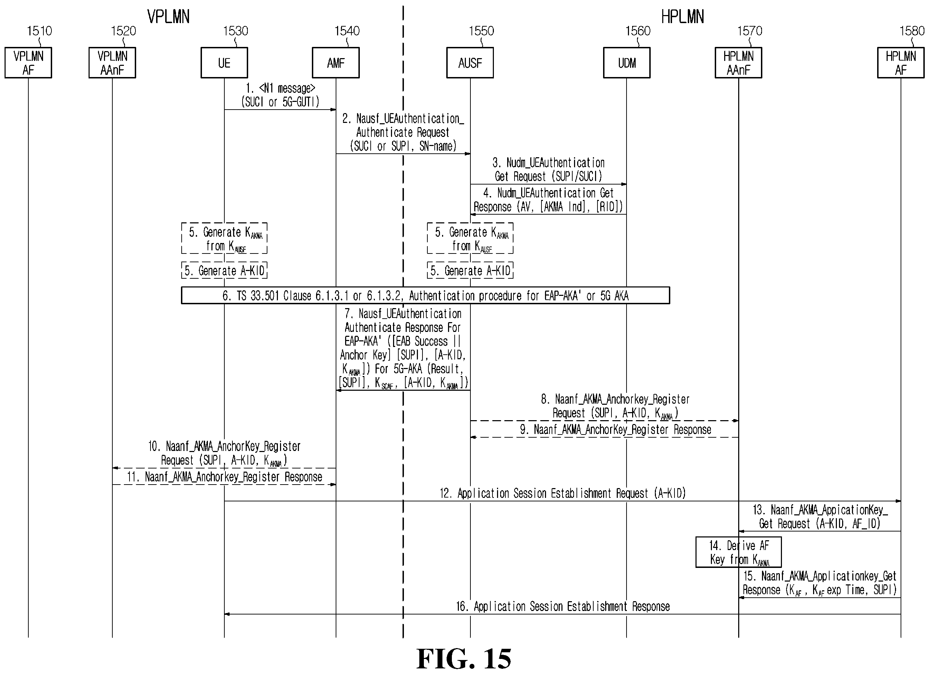

On the other hand, in case the terminal is not a roaming terminal, an application key may be requested to an AAnF 1570 of an HPLMN that is retrieved using the NRF discovery and selection procedure or a local configuration, and this may be the same as illustrated in FIG. 15. More specifically, a terminal 1530 may transmit an application session establishment request to an AF 1580 of an HPLMN based on a Ua interface. Herein, the application session establishment request may include an A-KID. In case the AF 1580 of the HPLMN does not have a security context related to the received A-KID, the AF 1580 of the HPLMN may send the A-KID to an AAnF 1570 of the HPLMN to request K_{AF}. As an example, the AF 1580 of the HPLMN may perform a request including an AF_ID of the terminal to the AAnF 1570 of the HPLMN. Next, the AAnF 1570 of the HPLMN may generate and forward K_{AF} to the AF 1580 of the HPLMN, when the AAnF 1570 of the HPLMN is capable of providing a service to the AF 1580 of the HPLMN. On the other hand, if the AAnF 1570 of the HPLMN is incapable of providing a service to the AF 1580 of the HPLMN, the AAnF 1570 of the HPLMN may suspend the corresponding procedure. Specifically, the AAnF 1570 of the HPLMN may verify whether or not AKMA is available based on the presence of K_{AKMA} related to A-KID. Herein, in case there is KAKMA corresponding to the AAnF 1570 of the HPLMN, if there is no K_{AF} that is made before, the AAnF 1570 of the HPLMN may generate K_{AF}. Next, the AAnF 1570 of the HPLMN may forward an SUPI, the generated K_{AF} and an K_{AF} expiration time to the AF 1580 of the HPLMN. Next, the AF 1580 of the HPLMN may inform the terminal 1530 of the completion of an application session. When the application session is generated, the terminal and the application may perform communication through the session.

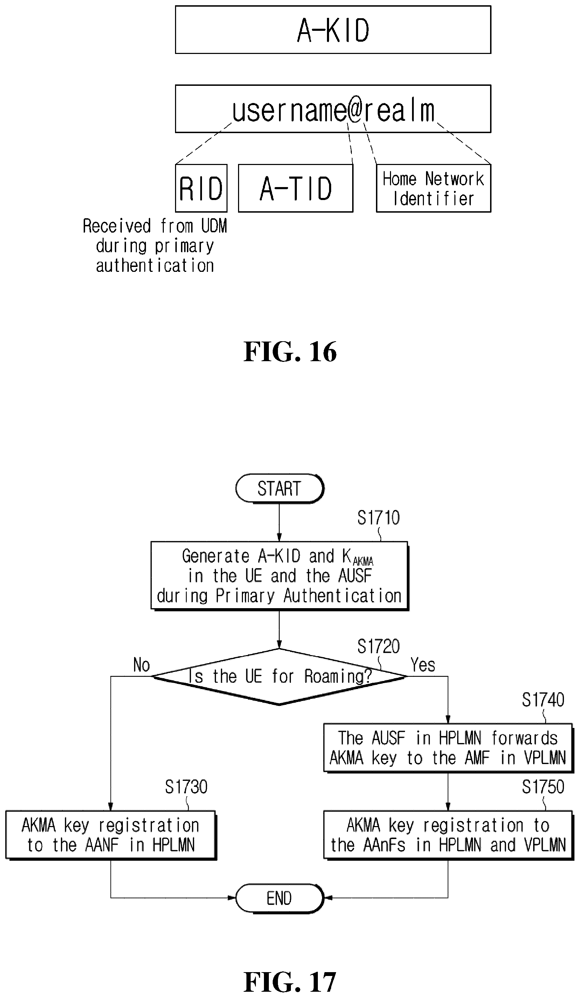

FIG. 16 is a view showing an A-KID applicable to the present disclosure. In FIG. 14 and FIG. 15 described above, an AF may determine, based on a received A-KID, whether or not a corresponding request is a service for a roaming terminal. Specifically, referring to FIG. 16, an A-KID may be configured in the form of "username@realm". The AF may determine whether or not a terminal is a roaming terminal, based on information of "realm" meaning a home network identifier and a service provider network ID (e.g., PLMN ID, a network name) with which the AF has entered into a service agreement. As a concrete example, if the home network identifier of "realm" is identical with a service provider that enters into a service agreement, it may be determined to be an AKMA service in an HPLMN. On the other hand, if the home network identifier of "realm" is different from a service provider that enters into a service agreement, it may be determined to be an AKMA service of a roaming terminal. As an example, when the AKMA service is a service of a roaming terminal, an application key may be requested to an AAnF of a VPLMN that is retrieved using an NRF discovery and selection procedure and a local configuration. Herein, a RID of an A-KID and a home network identifier may be used.

As another example, in case AAnF search and selection is performed in a VPLMN, selection may be performed based on a RID between an hNRF of a home network and a vNRF of a visited network. However, the RID may be information obtained from UDM, and a RID of an HPLMN and a RID of a VPLMN may be different from each other, accordingly. Thus, when a RID of an A-KID based on an HPLMN is used, a wrong AAnF instance may be retrieved. In case AAnF search and selection is performed in a VPLMN, a serving PLMN ID and a home network ID may further be utilized together with an A-KID. Herein, the serving PLMN ID may be perceived based on information on an IP address range used by a terminal and other information but not be limited to a specific form.

As another example, an A-KID may be newly defined in AKMA. As an example, referring to FIG. 16, an existing A-KID format may be "username@realm". Herein, the A-KID may be in a format of "RID + A-TID @ home network Identifier". Herein, as an example, if a serving PLMN ID is added to username, it may be used to search for an AAnF instance through an NRF in a VPLMN. That is, an A-KID may be used as shown in Table 1 below. Herein, if a terminal is not a roaming terminal, the serving PLMN ID may be filled with a specific default value (e.g., 000 000 or 000 00) and is not limited to a specific embodiment.

**[Table 1]**

| |
|---|
| RID + A-TID + serving PLMN ID @ home network identifier |

FIG. 17 is a view showing an AKMA key registration method that is applicable to the present disclosure. Referring to FIG. 17, each of a terminal and an AUSF may generate an A-KID and KAKMA respectively during primary authentication (S 1710). Herein, the AUSF may determine whether or not the terminal is roaming, based on a serving network name received through an N1 message based on triggering during the primary authentication (S1720). Herein, in case the terminal is not a roaming terminal, the AUSF may perform a key registration procedure in an AAnF of an HPLMN (S1730). On the other hand, in case the terminal is a roaming terminal, the AUSF may forward an AKMA anchor key to an AMF of a VPLMN (S1740). Next, after the key registration procedure is performed in the AAnF of the HPLMN, the key registration procedure may also be performed in an AAnF of the VPLMN (S1750). As an example, an order of the respective key registration procedures to the networks may not matter. In the case of a roaming terminal, because K_{AKMA} is registered in an AAnF of the VPLMN through a key registration procedure, a session may be generated when application session request is performed to an AF in the VPLMN. That is, an AUSF of the HPLMN may determine whether or not a terminal is roaming and register an AKMA anchor key by performing a key registration procedure into the AAnF of the VPLMN.

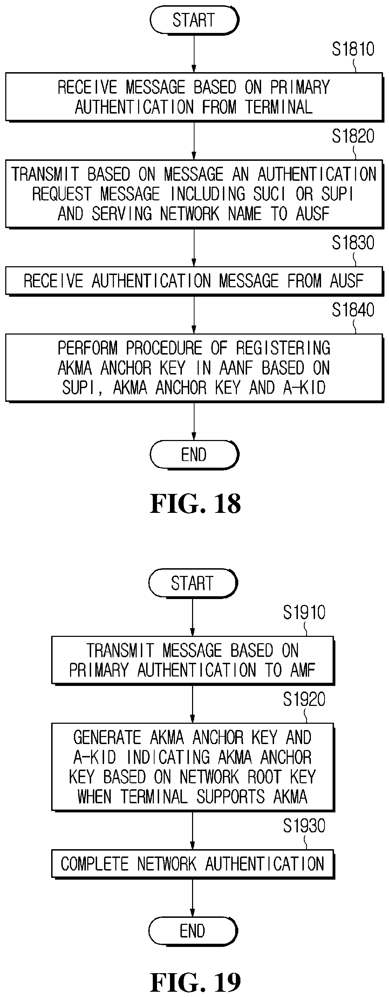

FIG. 18 is a flowchart of a method for operating an AMF that is applicable to the present disclosure. Referring to FIG. 18, the AMF may receive a message based on primary authentication from a terminal (S1810). Herein, the message may include any one of a subscription concealed identifier (SUCI) or a SG-globally unique temporary identifier (GUTI). In addition, as an example, the message may be an N1 message but is not limited to a specific embodiment.

Next, based on the message, the AMF may transmit an authentication request message including an SUCI or a subscriber permanent identifier (SUPI) and a serving network name (SN-name) to an authentication server function (AUSF) (S1820). Next, the AMF may receive an authentication response message from the AUSF (S1830). Herein, if a terminal is a roaming terminal and authentication and key management for applications (AKMA) is supported, the authentication response message may include an AKMA anchor key and an A-KID indicating the AKMA anchor key. Next, the AMF may perform a procedure of registering the AKMA anchor key in an AKMA anchor function (AAnF) based on the SUPI, the AKMA anchor key and the A-KID (S1840).

Herein, in case the terminal is a roaming terminal, the AMF may be an AMF for a visited public land mobile network (VPLMN), and the AAnF may be an AAnF of the VPLMN. Herein, the AUSF may be an AUSF of a home PLMN (HPLMN), and the AUSF may perform an AKMA anchor registration procedure with the AAnF of the HPLMN based on the AKMA anchor and the A-KID, irrespective of whether or not the termina is roaming. As an example, the AUSF of the HPLMN may determine, based on the serving network name, whether or not the terminal is a roaming terminal. Herein, if the terminal is a roaming terminal, the AUSF of the HPLMN may transmit an authentication message including the AKMA anchor key and the A-KID indicating the AKMA anchor key to the AMF for the VPLMN. The AMF for the VPLMN may perform the AKMA anchor key registration procedure with the AAnF of the VPLMN.

In addition, when the roaming terminal transmits an application session generation request to the application function (AF) of the VPLMN, an application key may be provided to the terminal based on the AAnF of the VPLMN. On the other hand, when the roaming terminal transmits an application session generation request to the AF of the HPLMN, an application key may be provided to the terminal based on the AAnF of the HPLMN.

Herein, the application session request transmitted by the roaming terminal may include an A-KID, and the AF may determine, based on the A-KID, whether or not the terminal is a roaming terminal.

As an example, if the terminal is determined to be a roaming terminal, the AF may obtain the application key derived from the AKMA anchor key, and application key expiration time information by requesting an application key to the AAnF of the VPLMN and perform application session establishment with the terminal. On the other hand, if the terminal is determined to be a non-roaming terminal, the AF may obtain the application key derived from the AKMA anchor key, and application key expiration time information by requesting an application key to the AAnF of the HPLMN and perform application session establishment with the terminal.

In addition, as an example, the AMF for the VPLMN may select an AAnF of the VPLMN based on a routing indicator (RID) and a home network identifier in an A-KID according to a network repository function (NRF) discovery and selection procedure or a local configuration. Herein, the AMF for the VPLMN may select the AAnF of the VPLMN by further utilizing a serving PLMN ID. Herein, the A-KID may further include the serving PLMN ID, and in case the terminal is a roaming terminal, the serving PLMN ID in the A-KID may indicate a VPLMN ID. On the other hand, in case the terminal is a non-roaming terminal, the serving PLMN ID in the A-KID may be set to a preset value, and this is the same as described above. In addition, in case the terminal and the AUSF perform primary authentication, the AUSF may receive, from unified data management (UDM), an indication regarding whether or not AKMA is supported. Herein, in case AKMA is supported, an AKMA anchor key and an A-KID may be generated based on a network root key in each of the terminal and the AUSF, and this is the same as described above.

FIG. 19 is a view showing a method for operating a terminal that is applicable to the present disclosure.

Referring to FIG. 19, the terminal may transmit a message based on primary authentication to an access and mobility management function (AMF) (S1910). Herein, the message may include any one of a subscription concealed identifier (SUCI) or a 5G-globally unique temporary identifier (GUTI). Herein, in case the terminal supports authentication and key management for applications (AKMA), the terminal may generate an AKMA anchor key and an A-KID indicating the AKMA anchor key based on a network root key (S1920). Next, the terminal may complete authentication for a network (S1930). Herein, in case the terminal is a roaming terminal, the AMF may obtain the AKMA anchor key and the A-KID indicating the AKMA anchor key and perform a procedure of registering the AKMA anchor key in an AKMA anchor function (AAnF).

Herein, in case the terminal is a roaming terminal, the AMF may be an AMF for a visited public land mobile network (VPLMN), and the AAnF may be an AAnF of the VPLMN. Herein, the AUSF may be an AUSF of a home PLMN (HPLMN), and the AUSF may perform an AKMA anchor registration procedure with the AAnF of the HPLMN based on the AKMA anchor and the A-KID, irrespective of whether or not the termina is roaming. As an example, the AUSF of the HPLMN may determine, based on the serving network name, whether or not the terminal is a roaming terminal. Herein, if the terminal is a roaming terminal, the AUSF of the HPLMN may transmit an authentication message including the AKMA anchor key and the A-KID indicating the AKMA anchor key to the AMF for the VPLMN. The AMF for the VPLMN may perform the AKMA anchor key registration procedure with the AAnF of the VPLMN.

In addition, when the roaming terminal transmits an application session generation request to the application function (AF) of the VPLMN, an application key may be provided to the terminal based on the AAnF of the VPLMN. On the other hand, when the roaming terminal transmits an application session generation request to the AF of the HPLMN, an application key may be provided to the terminal based on the AAnF of the HPLMN.

Herein, the application session request transmitted by the terminal may include an A-KID, and the AF may determine, based on the A-KID, whether or not the terminal is a roaming terminal.

As an example, if the terminal is determined to be a roaming terminal, the AF may request an application key to the AAnF of the VPLMN, obtain the application key derived from the AKMA anchor key, and application key expiration time information and perform application session establishment with the terminal. On the other hand, if the terminal is determined to be a non-roaming terminal, the AF may request an application key to the AAnF of the HPLMN, obtain the application key derived from the AKMA anchor key, and application key expiration time information and perform application session establishment with the terminal.

In addition, as an example, the AMF for the VPLMN may select an AAnF of the VPLMN based ib a routing indicator (RID) and a home network identifier in an A-KID according to a network repository function (NRF) discovery and selection procedure or a local configuration. Herein, the AMF for the VPLMN may select the AAnF of the VPLMN by further utilizing a serving PLMN ID. Herein, the A-KID may further include the serving PLMN ID, and in case the terminal is a roaming terminal, the serving PLMN ID in the A-KID may indicate a VPLMN ID. On the other hand, in case the terminal is a non-roaming terminal, the serving PLMN ID in the A-KID may be set to a preset value, and this is the same as described above. In addition, in case the terminal and the AUSF perform primary authentication, the AUSF may receive, from unified data management (UDM), an indication regarding whether or not AKMA is supported. Herein, in case AKMA is supported, an AKMA anchor key and an A-KID may be generated based on a network root key in each of the terminal and the AUSF, and this is the same as described above.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method for operating an access and mobility management function (AMF) in a wireless communication, the method comprising:
receiving a message based on primary authentication from a terminal, wherein the message includes any one of a subscription concealed identifier (SUCI) or a 5G-globally unique temporary identifier (GUTI);
transmitting an authentication request message including the SUCI or a subscriber permanent identifier (SUPI) and a serving network name (SN-name) to an authentication server function (AUSF) based on the message; and
receiving an authentication response message from the AUSF,
wherein, based on the terminal being a roaming terminal and authentication and key management for applications (AKMA) being supported, the authentication response message includes an AKMA anchor key and an A-KID indicating the AKMA anchor key, and
wherein the AMF performs a procedure of registering the AKMA anchor key in an AKMA anchor function (AAnF) based on the SUPI, the AKMA anchor key and the A-KID.

2. The method of claim 1, wherein based on the terminal being a roaming terminal, the AMF is an AMF for a visited public land mobile network (VPLMN), and the AAnF is an AAnF of the VPLMN.

3. The method of claim 2, wherein the AUSF is an AUSF of a home PLMN (HPLMN), and the AUSF performs the procedure of registering the AKMA anchor key with the AAnF of the HPLMN based on the AKMA anchor key and the A-KID, irrespective of whether or not the terminal is roaming.

4. The method of claim 3, wherein the AUSF of the HPLMN determines, based on the serving network name, whether or not the terminal is a roaming terminal,
wherein based on the terminal being a roaming terminal, the AUSF of the HPLMN transmits the authentication message including the AKMA anchor key and the A-KID indicating the AKMA anchor key to the AMF for the VPLMN, and
wherein the AMF for the VPLMN performs the procedure of registering the AKMA anchor key with the AAnF of the VPLMN.

5. The method of claim 4, wherein based on the roaming terminal transmitting an application session generation request to an application function (AF) of the VPLMN, an application key is provided to the terminal based on the AAnF of the VPLMN, and
wherein based on the roaming terminal transmitting the application session generation request to an AF of the HPLMN, an application key is provided to the terminal based on the AAnF of the HPLMN.

6. The method of claim 5, wherein the application session request transmitted by the terminal includes the A-KID, and an AF determines, based on the A-KID, whether or not the terminal is a roaming terminal.

7. The method of claim 6, wherein based on the terminal being determined to be the roaming terminal, the AF obtains the application key derived from the AKMA anchor key, and application key expiration time information by requesting the application key to the AAnF of the VPLMN and performs application session establishment with the terminal.

8. The method of claim 6, wherein based on the terminal being determined to be the non-roaming terminal, the AF obtains the application key derived from the AKMA anchor key, and application key expiration time information by requesting the application key to the AAnF of the HPLMN and performs application session establishment with the terminal.

9. The method of claim 2, wherein the AMF for the VPLMN selects the AAnF of the VPLMN based on a routing indicator (RID) and a home network identifier in the A-KID according to a network repository function (NRF) discovery and selection procedure or a local configuration.

10. The method of claim 9, wherein the AMF for the VPLMN selects the AAnF of the VPLMN by further utilizing a serving PLMN ID.

11. The method of claim 10, wherein the A-KID further includes the serving PLMN ID,
wherein based on the terminal being the roaming terminal, the serving PLMN ID in the A-KID indicates the VPLMN ID, and
wherein based on the terminal being the non-roaming terminal, the serving PLMN ID in the A-KID is set to a preset value.

12. The method of claim 1, wherein based on the terminal and the AUSF performing the primary authentication, the AUSF receives, from unified data management (UDM), an indication regarding whether or not the AKMA is supported, and
wherein based on the AKMA being supported, the AKMA anchor key and the A-KID are generated based on a network root key in each of the terminal and the AUSF.

13. The method of claim 1, wherein the message based on the primary authentication received from the terminal is an N1 message.

14. An access and mobility management function (AMF) operating in a wireless communication, the AMF comprising:
at least one transceiver;
at least one processor; and
at least one memory functionally coupled with the at least one processor and storing instructions that instruct, when executed, the at least one processor to perform a specific operation,
wherein the specific operation controls the at least one transceiver to:
receive a message based on primary authentication from a terminal, wherein the message includes any one of a subscription concealed identifier (SUCI) or a 5G-globally unique temporary identifier (GUTI),
transmit an authentication request message including the SUCI or a subscriber permanent identifier (SUPI) and a serving network name (SN-name) to an authentication server function (AUSF) based on the message, and
receive an authentication response message from the AUSF,
wherein based on the terminal being a roaming terminal and authentication and key management for applications (AKMA) being supported, the authentication response message includes an AKMA anchor key and an A-KID indicating the AKMA anchor key, and
wherein the AMF performs a procedure of registering the AKMA anchor key in an AKMA anchor function (AAnF) based on the SUPI, the AKMA anchor key and the A-KID.

15. A method for operating a terminal in a wireless communication system, the method comprising:
management function (AMF), wherein the message includes any one of a subscription concealed identifier (SUCI) or a 5G-globally unique temporary identifier (GUTI);
based on the terminal supporting authentication and key management for applications (AKMA), generating an AKMA anchor key and an A-KID indicating the AKMA anchor key based on a network root key, and
completing authentication for a network,
wherein based on the terminal being a roaming terminal, the AMF obtains the AKMA anchor key and the A-KID indicating the AKMA anchor key and performs a procedure of registering the AKMA anchor key in an AKMA anchor function (AAnF).

16. A terminal operating in a wireless communication system, the terminal comprising:
at least one transceiver;
at least one processor; and
at least one memory functionally coupled with the at least one processor and storing instructions that instruct, when executed, the at least one processor to perform a specific operation,
wherein the specific operation is configured to:
control the at least one transceiver to transmit a message based on primary authentication to an access and mobility management function (AMF), wherein the message includes any one of a subscription concealed identifier (SUCI) or a 5G-globally unique temporary identifier (GUTI),
based on the terminal supporting authentication and key management for applications (AKMA), generate an AKMA anchor key and an A-KID indicating the AKMA anchor key based on a network root key, and
complete authentication for a network,
wherein based on the terminal being a roaming terminal, the AMF obtains the AKMA anchor key and the A-KID indicating the AKMA anchor key and performs a procedure of registering the AKMA anchor key in an AKMA anchor function (AAnF).

17. A device comprising:
at least one memory; and
at least one processor functionally coupled with the at least one memory,
wherein the at least one processor controls the device to:
receive a message based on primary authentication from a terminal, wherein the message includes any one of a subscription concealed identifier (SUCI) or a 5G-globally unique temporary identifier (GUTI),
transmit an authentication request message including the SUCI or a subscriber permanent identifier (SUPI) and a serving network name (SN-name) to an authentication server function (AUSF) based on the message, and
receive an authentication response message from the AUSF,
wherein based on the terminal being a roaming terminal and authentication and key management for applications (AKMA) being supported, the authentication response message includes an AKMA anchor key and an A-KID indicating the AKMA anchor key, and
wherein the AMF performs a procedure of registering the AKMA anchor key in an AKMA anchor function (AAnF) based on the SUPI, the AKMA anchor key and the A-KID.

18. A non-transitory computer-readable medium storing at least one instruction, the non-transitory computer-readable medium comprising the at least one instruction that is executable by a processor,
wherein the at least one instruction controls a device to:
receive a message based on primary authentication from a terminal, wherein the message includes any one of a subscription concealed identifier (SUCI) or a 5G-globally unique temporary identifier (GUTI),
transmit an authentication request message including the SUCI or a subscriber permanent identifier (SUPI) and a serving network name (SN-name) to an authentication server function (AUSF) based on the message, and
receive an authentication response message from the AUSF,
wherein based on the terminal being a roaming terminal and authentication and key management for applications (AKMA) being supported, the authentication response message includes an AKMA anchor key and an A-KID indicating the AKMA anchor key, and
wherein the AMF performs a procedure of registering the AKMA anchor key in an AKMA anchor function (AAnF) based on the SUPI, the AKMA anchor key and the A-KID.
